(19) Europäisches Patentamt
European Patent Office
Office européen des brevets

(11) **EP 4 242 932 A1**

(12) **EUROPEAN PATENT APPLICATION**

(43) Date of publication:
**13.09.2023  Bulletin 2023/37**

(21) Application number: **23155513.7**

(22) Date of filing: **08.02.2023**

(51) International Patent Classification (IPC):
**G06N 5/025** (2023.01)  **G06N 5/01** (2023.01)

(52) Cooperative Patent Classification (CPC):
**G06N 5/025; G06N 5/01;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.03.2022  JP 2022038624**

(71) Applicants:
• **Fujitsu Limited**
  **Kawasaki-shi, Kanagawa 211-8588 (JP)**

• **OSAKA UNIVERSITY**
  **Suita-shi**
  **Osaka 565-0871 (JP)**

(72) Inventors:
• **GOTO, Keisuke**
  **Kawasaki-shi, Kanagawa, 211-8588 (JP)**
• **HARA, Satoshi**
  **Suita-shi, Osaka, 565-0871 (JP)**

(74) Representative: **Hoffmann Eitle**
**Patent- und Rechtsanwälte PartmbB**
**Arabellastraße 30**
**81925 München (DE)**

(54) **DATA CONVERTING DEVICE AND METHOD**

(57)     A data converting device includes a processor that executes a procedure. The procedure includes: for each of plural conversion rules, specifying a difference between pre-conversion data and post-conversion data generated by applying the plural conversion rules respectively to the pre-conversion data; determining application probabilities of the plural conversion rules respectively, in accordance with deviations in first plural data based on a first attribute of the first plural data and the differences for the plurality conversion rules; and generating second plural data by applying the plural conversion rules to the first plural data based on the application probabilities.

FIG.1

**Description**

FIELD

The embodiments discussed herein are related to a data converting program, a data converting device, and a data converting method.

BACKGROUND

There are cases in which values of specific attributes included in training data used in training a machine-learned model are biased, and the results of judgement by that machine-learned model are discriminatory. For example, a case can be envisaged of training a machine-learned model that estimates results of success or failure from attributes of a person by using training data whose explanatory variables are sex, age, birthplace or the like of the person, and whose objective variables are the results of success or failure of that person with respect to employment or a test or the like. In such a case, if using, as the training data, a past history in which the sex being female is treated unfavorably with respect to the results of success or failure, a machine-learned model that is trained by using that training data will carry out discriminatory estimation such as handing down judgements that are disadvantageous to women.

Techniques of eliminating bias such as described above by converting data have been proposed. For example, there has been proposed a technique of converting data such that the data distributions become the same in cases in which there are attributes that have the possibility of bringing about discriminatory behavior and in cases in which there are no such attributes. Further, a technique has been proposed of converting data, which correspond to conversion rules that are set in advance, in accordance with those conversion rules. Moreover, there has been proposed a technique of providing constraints that suppress the degree of change in the distribution, and then converting from arbitrary data X1 to arbitrary data X2 at probability P(X1,X2). For example, related arts are disclosed in Feldman, M., Friedler, S.A., Moeller, J., Scheidegger, C. and Venkatasubramanian S., "Certifying and removing disparate impact", In proceedings of the 21th ACM SIGKDD international conference on knowledge discovery and data mining, 2015, August, pp. 259-268., Hajian, S. and Domingo-Ferrer, J., "A methodology for direct and indirect discrimination prevention in data mining", IEEE transactions on knowledge and data engineering, 25(7), 2012, pp. 1445-1459., and Calmon, F.P., Wei, D., Vinzamuri, B., Ramamurthy, K.N. and Varshney, K.R., "Optimized pre-processing for discrimination prevention", In Proceedings of the 31st International Conference on Neural Information Processing Systems, 2017, December, pp. 3995-4004.

If the distributions of the data before and after conversion differ greatly due to data conversion for eliminating bias, there is the problem that the estimation accuracy of a machine-learned model, which is trained by using the post-conversion data as the training data, deteriorates.

SUMMARY

As one aspect thereof, an object of the technique of the present disclosure is to suppress change in the distribution of data that is due to data conversion for eliminating bias.

According to an aspect of the embodiments, there is provided a data converting program causing a computer to execute a process of: for each of plural conversion rules, specifying a difference between pre-conversion data and post-conversion data generated by applying the plural conversion rules respectively to the pre-conversion data; determining application probabilities of the plural conversion rules respectively, in accordance with deviations in first plural data based on a first attribute of the first plural data and the differences for the plural conversion rules; and generating second plural data by applying the plural conversion rules to the first plural data in accordance with the application probabilities.

BRIEF DESCRIPTION OF DRAWINGS

Fig. 1 is a drawing for explaining the eliminating of bias by data conversion.
Fig. 2 is a functional block drawing of a data converting device.
Fig. 3 is a drawing illustrating an example of a network for applying a minimum cost flow problem.
Fig. 4 is a drawing for explaining the determination of an application probability per conversion rule.
Fig. 5 is a block drawing illustrating an example of the schematic structure of a computer that functions as the data converting device.
Fig. 6 is a flowchart illustrating an example of data converting processing.

DESCRIPTION OF EMBODIMENTS

An example of an embodiment relating to the technique of the disclosure is described hereinafter with reference to the drawings.

Before details of the embodiment are described, the elimination of bias by data conversion is described first.

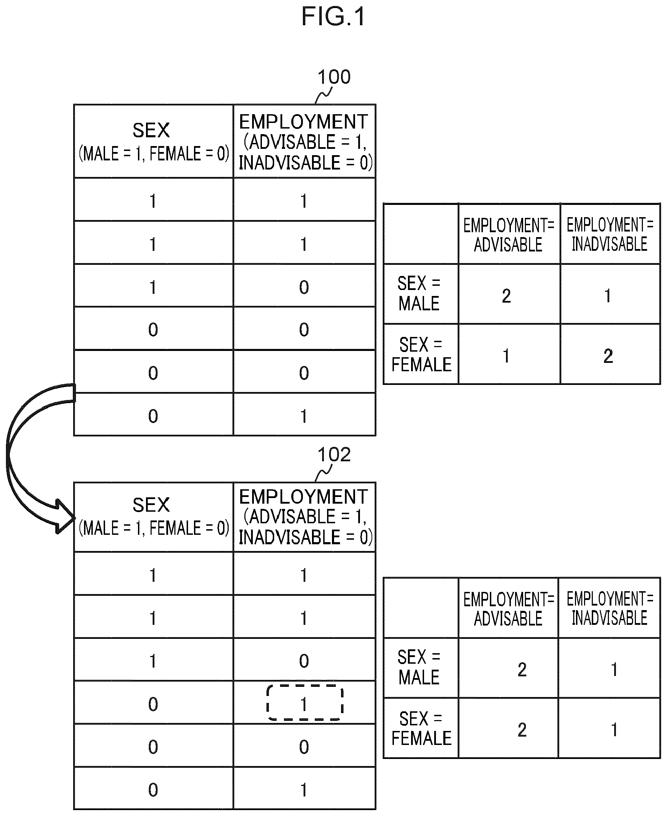

Pre-conversion data 100 illustrated in Fig. 1 has "sex" and "employment" as attributes. The values of the "sex" attribute are 1 in a case in which the sex of the person corresponding to that data is male, and 0 in the case of female. The "employment" attribute is an attribute expressing the advisability of employing the person corresponding to that data. The value for the "employment" attribute is 1 in a case in which employing the person is advisable, and is 0 in a case in which employing the person is inadvisable. The same holds for post-conversion data 102 as well. As illustrated in the upper part of Fig. 1, in the pre-conversion data 100, in the case of sex = male, the probability of employment = advisable is 2/3, and in the case of sex = female, the probability of employment = advisable is 1/3. In this way, in the pre-conversion data 100, the probability of employment = advisable greatly differs, i.e., there is bias, depending on the sex. In this example, 2/3 - 1/3 = 1/3 corresponds to the amount of bias. There is the possibility that a machine-learned model that is trained by data having bias will give rise to discriminatory behavior, such as the estimation will change greatly due to a sensitive attribute (here, the sex). Thus, by converting the data as illustrated in the lower part of Fig. 1 (the dashed-line portion in Fig. 1), in the post-conversion data 102, the probability of employment = advisable is 2/3 for both cases in which sex = male and cases in which sex = female, and the amount of bias is 2/3 - 2/3 = 0, and bias due to sex is eliminated.

Here, for the above-described data conversion, it is desirable that the distributions of data before and after conversion do not change greatly. This is because, if the distribution changes greatly, there are cases in which the estimation accuracy of a machine-learned model, which is trained by using the post-conversion data as the training data, will deteriorate. Further, it is preferable that there be data conversion that can be interpreted by humans, i.e., that the data conversion be interpretive. This is because, if the data conversion is not interpretive, it is difficult to manually check the appropriateness of the conversion with respect to the post-conversion data. As interpretive data conversion, a technique of converting data based on predetermined conversion rules can be considered. Thus, in the present embodiment, the data conversion is data conversion that is based on conversion rules, and bias is eliminated from the data by data conversion that suppresses a change in the distribution of the post-conversion data. The data converting device relating to the present embodiment is described in detail hereinafter.

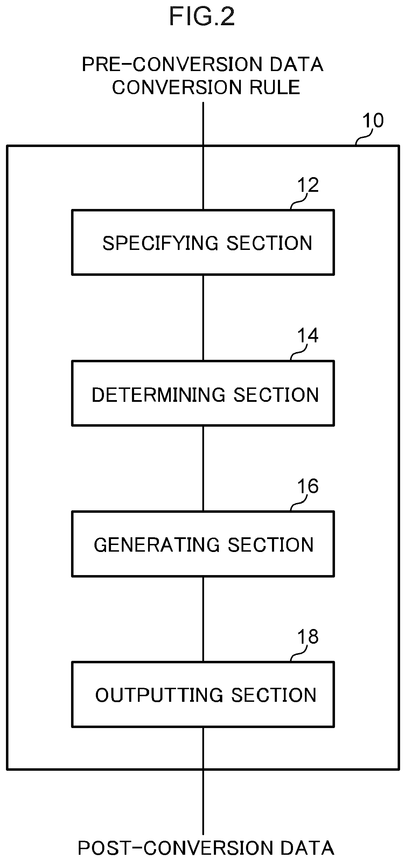

As illustrated in Fig. 2, plural pre-conversion data and plural conversion rules are inputted into a data converting device 10. Then, the data converting device 10 carries out data conversion on the pre-conversion data, and outputs post-conversion data. In the same way as in the case of the example of Fig. 1, the data that are included respectively in the pre-conversion data and the post-conversion data include values relating to plural attributes respectively. In the present embodiment, the types of attributes include general attributes, target attributes and sensitive attributes. Target attributes are attributes that are the results of judgment in tasks using data, such as "employment" in the above-described example. Sensitive attributes are attributes that may give rise to bias, such as "sex" in the above-described example. General attributes are attributes other than target attributes and sensitive attributes, and are, for example, education, age, and the like. Plural general attributes may be included in the data, but hereinafter, a case in which there is a single general attribute is described in order to simplify explanation.

As illustrated in Fig. 2, the data converting device 10 functionally includes a specifying section 12, a determining section 14, a generating section 16 and an outputting section 18.

For each of the plural conversion rules, the specifying section 12 specifies a distance (difference) between pre-conversion data and post-conversion data, which is generated by applying the respective plural rules to the pre-conversion data. Here, the value of the general attribute of data $X_k$ is $x_k$, the value of the target attribute is $y_k$, and the value of the sensitive attribute is $s_k$, and the data $X_k$ is expressed by the vector $(x_k, y_k, s_k)$. For arbitrary data $X_k = (x_k, y_k, s_k)$ and data $X_m = (x_m, y_m, s_m)$, the specifying section 12 acquires the definition of distance $c(X_k, X_m)$ between $X_k$ and $X_m$. For example, the distance $c(X_k, X_m)$ may be the Euclidean distance of $X_k$ and $X_m$.

$$X_1 = (20,1,1), \ X_2 = (50,1,1), \ c(X_1, X_2) = 30$$

$$X_1 = (20,1,1), \ X_3 = (25,1,1), \ c(X_1, X_3) = 5$$

In this case, a greater distance means that the data differs more. For example, the above-described example illustrates that the difference with data $X_1$ is greater for data $X_2$ than for data $X_3$. Namely, this distance $c(X_k, X_m)$ is an index expressing the degree of change in the distribution of data in a case in which data $X_k$ is converted into data $X_m$. The specifying section 12 specifies the distances $c(X_k, X_m)$ for all combinations of data that can be supposed as combinations of values of the respective attributes.

The determining section 14 determines the application probability of each of the plural conversion rules based on the deviation of the data in a case in which the sensitive attribute is used as the reference, and the difference in the data before and after conversion. Specifically, the determining section 14 determines a probability of application of each of the plural conversion rules such that the deviation of the data before and after conversion in a case in which the sensitive attribute is used as the reference, and the difference in the data before and after conversion, become minima.

The conversion rule is a rule for converting data that matches a condition into new data, and is expressed as follows for example.

$$\text{conversion rule } r = ((x',y',s'),(x'',y'',s''))$$

$$\text{if } (x,y,s) = (x',y',s') \text{ return}(x'',y'',s'')$$

Namely, (x',y',s') is the condition, and (x'',y'',s'') is the result of conversion. However, x', y' and s' may be the wildcard "*" that matches a specific value or all values. Further, x'', y'' and s'' are only specific values, and do not include wildcards.

The determining section 14 acquires set R of conversion rules r that match the data X = (x,y,s), and determines application probability p(r) that expresses the proportion of data to which conversion rule r∈R is to be applied, among the total number of the data X. Here, in order to eliminate bias from the pre-conversion data, data conversion must be carried out such that, in the post-conversion data, the number of data whose target attribute is a predetermined value is fair regardless of the value of the sensitive attribute. For example, the numbers of data corresponding to the sensitive attribute and the target attribute are written as follows.

$$\text{data set D} = \{(x_n, y_n, s_n)\}_{n=1}^{N}$$

$$N_j = \sum_{n=1}^{N} 1(y_n = j), j \in \{0, 1\} \tag{1}$$

$$N^i = \sum_{n=1}^{N} 1(s_n = i), i \in \{0, 1\} \tag{2}$$

$$N_j^i = \sum_{n=1}^{N} 1(y_n = j \wedge s_n = i) \tag{3}$$

Here, the respective (x,y,s) are discrete values. Further, $1(y_n=j)$ is a function that repeats 1 in a case in which $y_n = j$, and repeats 0 in other cases. Namely, formula (1) expresses, among the data within the data set, the number of data whose target attribute is a predetermined value. Formula (2) expresses, among the data within the data set, the number of data whose sensitive attribute is a predetermined value. Formula (3) expresses, among the data within the data set, the number of data whose target attribute is a predetermined value and whose sensitive attribute is a predetermined value.

Further, in order to carry out fair data conversion, it is made such that the probability that the value of the target attribute becomes a predetermined value does not change due to the sensitive attribute. Accordingly, it suffices to carry out data conversion such that, in the post-conversion data, following formula (4) and following formula (5) become equal, i.e., such that following formula (6) is satisfied.

$$P(y = j \mid s = i) = \frac{N_j^i}{N^i} \tag{4}$$

$$P(y = j) = \frac{N_j}{N} \tag{5}$$

$$N_j^i = \frac{N^i N_j}{N} \qquad\qquad (6)$$

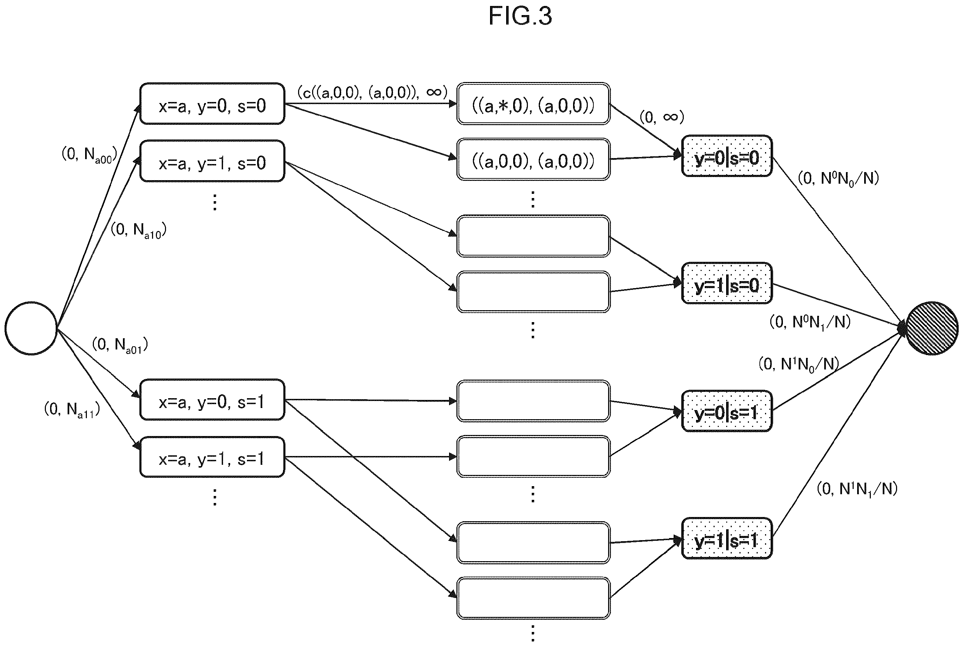

The determining section 14 determines the application probability p(r) for each conversion rule so as to suppress a change in the distributions of the data before and after conversion, while carrying out fair data conversion such as described above. In the present embodiment, the problem that determines the application probability p(r) per conversion rule is formulated into a minimum cost flow problem. Specifically, as illustrated in Fig. 3, the determining section 14 creates a network that includes a source node, plural first nodes, plural second nodes, plural third nodes and a sink node. In Fig. 3, the source node is expressed by the white circle, the sink node is expressed by the halftone dot meshed circle, the first nodes are expressed by the white rectangles with rounded corners that are drawn by solid lines, the second nodes are expressed by the white rectangles with rounded corners that are drawn by double lines, and the third nodes are expressed by the halftone dot meshed rectangles with rounded corners that are drawn by solid lines. The cost per one data that is required for the data to flow at the edge, and the capacity that expresses the maximum value of the number of data that can flow at the edge, are set at each edge (the arrows in Fig. 3) that connects nodes. In Fig. 3, the cost and capacity that are set for each edge are expressed as (cost, capacity).

The source node corresponds to the supply point of the flow in the minimum cost flow problem, and the sink node corresponds to the demand point. The determining section 14 causes the number of data that are included in data set D (the pre-conversion data) to flow from the source node toward the sink node. The first nodes are nodes respectively corresponding to the combinations (x',y',s') of values of the respective attributes of the pre-conversion data. The determining section 14 connects the source node and the respective first nodes by edges, and sets $(0, N_{x'y's'})$ at each edge. $N_{x'y's'}$ is the number of data at which x = x', y = y' and s = s', among the data X = (x,y,s) that are included in the data set D.

The second nodes are nodes respectively corresponding to the conversion rules r. The determining section 14 connects the first nodes by edges to the second nodes that correspond to the conversion rules that the data, which corresponds to that first node, matches, and sets $(c((x',y',s'),(x'',y'',s'')),\infty)$ for each edge. $(c((x',y',s'),(x'',y'',s'')))$ is the distance of the data before and after conversion due to the conversion rule r corresponding to the second node that is connected by the edge.

The third nodes are nodes corresponding to groups expressing pairs of value y of the target attribute and value s of the sensitive attribute. The determining section 14 connects the second nodes by edges with the third node, which corresponds to the group to which the post-conversion data in accordance with the conversion rules r corresponding to those second nodes belong, and sets $(0,\infty)$ for those edges. Further, the determining section 14 connects the respective third nodes and the sink node by edges, and sets $(0, N^{s''}N_{y''}/N)$ at the edges.

The determining section 14 sets the value of $N^{s''}N_{y''}/N$ such that the post-conversion data becomes fair, and specifically, satisfies above formula (6).

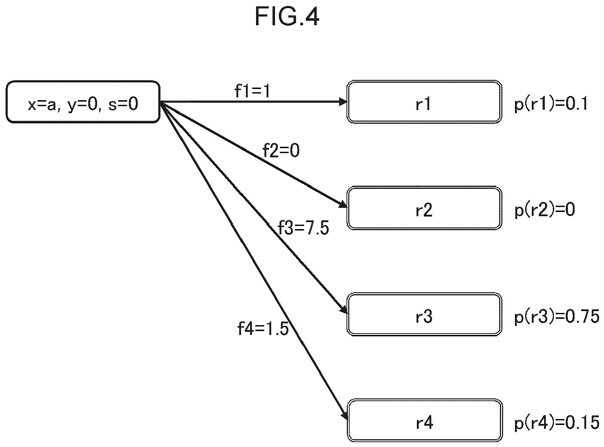

As described above, by setting the nodes, the edges and the cost and capacity per edge, the solution to the minimum cost flow problem of this network expresses a converting process in which the data set D becomes fair by using the conversion rules, and expresses conversion in which the change in the distributions before and after conversion is the minimum. Due to the determining section 14 solving the minimum cost flow problem of a network such as illustrated in Fig. 3, the determining section 14 extracts the flow for causing the data included in the data set D to flow from the source node to the sink node at the minimum cost. The flow is the number of data that flow through each edge. For example, the conversion rule that matches data X = (a,0,0) is ri (i = 1,2,3,4), and the flow is extracted as illustrated in Fig. 4. In Fig. 4, the flow that flows to the second node corresponding to the conversion rule ri is expressed as fi. Based on the extracted flow, the determining section 14 determines the application probability p(ri) of each conversion rule (ri) by p(ri) = fi/Σfi, such that $\Sigma_{r \in R}$ p(r) = 1.

The generating section 16 generates post-conversion data by applying plural conversion rules to the pre-conversion data, based on the application probabilities determined by the determining section 14. In the case of the example of Fig. 4, post-conversion data is generated by applying conversion rule r1 at an application probability of 0.1, conversion rule r3 at an application probability of 0.75, and conversion rule r4 at an application probability of 0.15, to data X = (a,0,0). For example, if there are 10 of the data X = (a,0,0), the generating section 16 generates the post-conversion data by applying conversion rule r1 to one of the data X, applying conversion rule r3 to seven or eight of the data X, and applying conversion rule r4 to one or two of the data X.

The outputting section 18 outputs the plural post-conversion data generated by the generating section 16. Further, the outputting section 18 may also output, together therewith, the application probability for each conversion rule that was applied by the generating section 16. Due thereto, the interpretability of the data conversion is improved more.

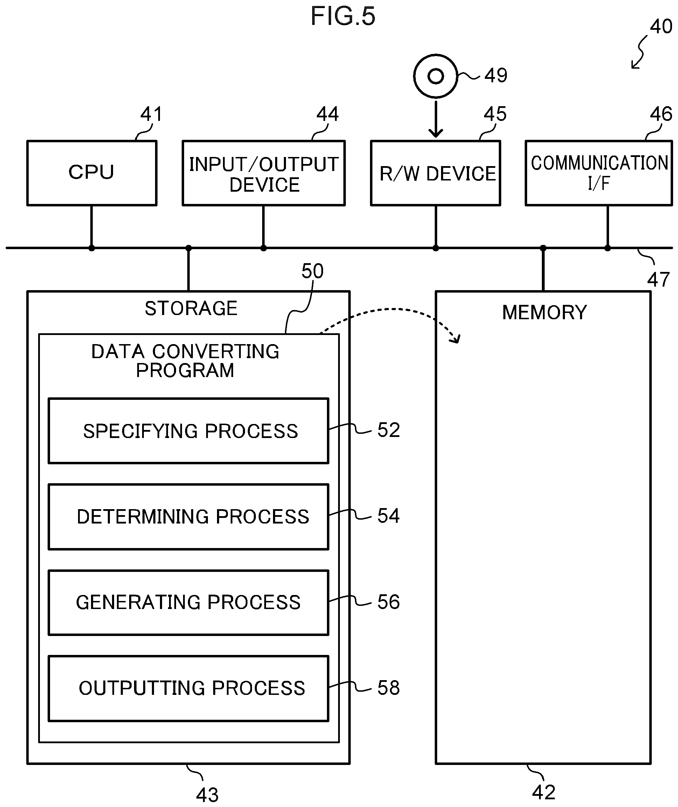

The data converting device 10 may be realized, for example, by a computer 40 illustrated in Fig. 5. The computer 40 has a CPU (Central Processing Unit) 41, a memory 42 serving as a temporary storage region, and a non-volatile storage 43. Further, the computer 40 has an input/output device 44 such as an input portion, a display portion and the like, and a R/W (Read/Write) section 45 that controls the reading and writing of data from and to a storage medium 49.

Moreover, the computer 40 has a communication I/F (Interface) 46 that is connected to a network such as the internet or the like. The CPU 41, the memory 42, the storage 43, the input/output device 44, the R/W section 45 and the communication I/F 46 are connected to one another via bus 47.

The storage 43 may be realized by an HDD (Hard Disk Drive), an SSD (Solid State Drive), a flash memory or the like. A data converting program 50 for causing the computer 40 to function as the data converting device 10 is stored in the storage 43 that serves as a storage medium. The data converting program 50 has a specifying process 52, a determining process 54, a generating process 56 and an outputting process 58.

The CPU 41 reads-out the data converting program 50 from the storage 43, expands the data converting program 50 in the memory 42, and successively executes the processes of the data converting program 50. By executing the specifying process 52, the CPU 41 operates as the specifying section 12 illustrated in Fig. 2. By executing the determining process 54, the CPU 41 operates as the determining section 14 illustrated in Fig. 2. By executing the generating process 56, the CPU 41 operates as the generating section 16 illustrated in Fig. 2. By executing the outputting process 58, the CPU 41 operates as the outputting section 18 illustrated in Fig. 2. Due thereto, the computer 40 that executes the data converting program 50 functions as the data converting device 10. Note that the CPU 41 that executes the program is hardware.

Note that the functions realized by the data converting program 50 can also be realized by, for example, a semiconductor integrated circuit, and, more specifically, an ASIC (Application Specific Integrated Circuit) or the like.

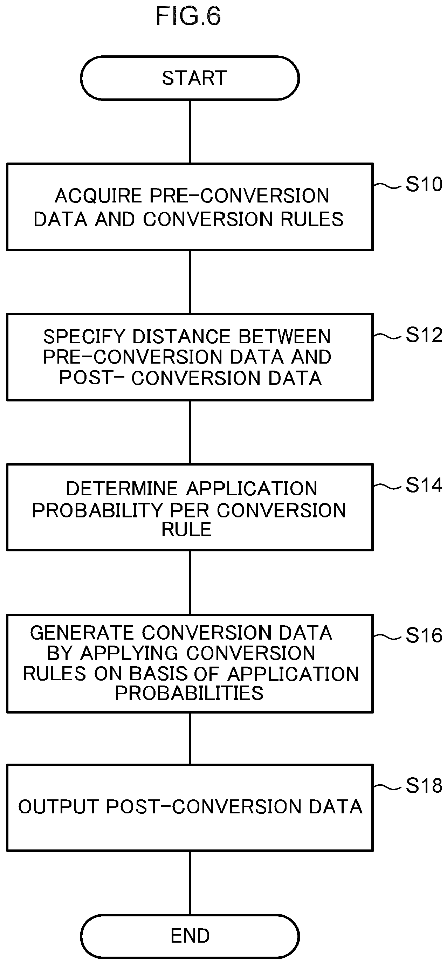

Operation of the data converting device 10 relating to the present embodiment is described next. When plural pre-conversion data and plural conversion rules are inputted to the data converting device 10, the data converting processing illustrated in Fig. 6 is executed at the data converting device 10. Note that the data converting processing is an example of the data converting method of the technique of the disclosure.

In step S10, the specifying section 12 acquires the plural pre-conversion data and the plural conversion rules that were inputted to the data converting device 10. Next, in step S12, for each of the plural conversion rules, the specifying section 12 specifies the distance between the pre-conversion data, and the post-conversion data that was generated by applying the plural conversion rules respectively to the pre-conversion data.

Next, in step S14, the determining section 14 determines the respective application probabilities of the plural conversion rules, such that the deviation of the data before and after conversion in a case in which the sensitive attribute is used as the reference, and the distance of the data before and after conversion, become minima. Next, in step S16, the generating section 16 applies the plural conversion rules to the pre-conversion data based on the application probabilities determined in above step S14, and generates post-conversion data. Next, in step S18, the outputting section 18 outputs the plural post-conversion data generated in above step S 16, and the data converting processing ends.

As described above, for each of plural conversion rules, the data converting device relating to the present embodiment specifies a distance between pre-conversion data, and post-conversion data generated by applying the plural conversion rules respectively to the pre-conversion data. Further, the data converting device determines application probabilities of the plural conversion rules respectively, based on the deviations in data in cases in which the sensitive attribute is used as the reference, and the distances of the data before and after the conversion. Then, the data converting device applies the plural conversion rules to the pre-conversion data based on the determined application probabilities, and generates post-conversion data. Due thereto, the data converting device can suppress a change in the distributions of the data due to data conversion that is for eliminating bias.

Note that the above embodiment describes a case in which a minimum cost flow problem is applied to the determining of the application probabilities, but the present disclosure is not limited to this. For example, in patterns that allocate numbers of data such that there is fair data conversion, i.e., such that above formula (6) is satisfied, the data converting device may specify the distances of the data before and after conversion by round robin, and may determine the application probability per conversion rule based on the pattern in which the distance is the minimum. However, the application probabilities can be determined efficiently by applying a minimum cost flow problem as in the above-described embodiment.

Further, although the above embodiment describes a form in which the data converting program is stored in advance (is installed) in a storage, the present disclosure is not limited to this. The program relating to the technique of the disclosure can also be provided in a form of being stored on a storage medium such as a CD-ROM, a DVD-ROM, a USB memory or the like.

**Claims**

1. A data converting program causing a computer to execute processing of:

   for each of a plurality of conversion rules, specifying a difference between pre-conversion data and post-conversion data generated by applying the plurality of conversion rules respectively to the pre-conversion data;

determining application probabilities of the plurality of conversion rules, respectively, in accordance with deviations in a first plurality of data based on a first attribute of the first plurality of data and the differences for the plurality of conversion rules; and
generating a second plurality of data by applying the plurality of conversion rules to the first plurality of data in accordance with the application probabilities.

2. The data converting program of claim 1, wherein each of the deviations is deviation of a number of the first plurality of data per combination of the first attribute and a second attribute.

3. The data converting program of claim 2, wherein:

the plurality of conversion rules are respectively expressed by combinations of pre-conversion data and post-conversion data, and
the determining of the application probabilities includes determining the application probabilities based on numbers of data in a case of allocating the first plurality of data to the respective conversion rules to which the first plurality of data correspond, such that the deviations and the differences become minima.

4. The data converting program of claim 3, wherein the determining of the application probabilities includes determining the application probabilities such that a sum of the application probabilities of the respective plurality of conversion rules to which the first plurality of data correspond is one.

5. The data converting program of claim 3 or claim 4, wherein the determining of the application probabilities includes determining the application probabilities such that the deviations and the differences become minima, by applying a minimum cost flow problem to a network that includes a source node, first nodes corresponding to the first plurality of data, second nodes corresponding to the plurality of conversion rules, third nodes corresponding to combinations of the first attributes and the second attributes, a sink node, first edges connecting the source node and the first nodes and having, as capacities, numbers of data corresponding to the first nodes, second edges connecting the first nodes and the second nodes and having, as costs, the differences in a case in which the data corresponding to the first nodes is converted by conversion rules corresponding to the second nodes, third edges connecting the second nodes and the third nodes that correspond to the combinations for post-conversion data expressed by conversion rules corresponding to the second nodes, and fourth edges connecting the third nodes and the sink node and having, as capacities, numbers of data that are set such that the deviations become fair.

6. The data converting program of any one of claims 1 to 5, wherein the generating of the second plurality of data includes, for each conversion rule to which the first plurality of data correspond, applying the conversion rule to, among the first plurality of data, data of a number corresponding to the application probability determined for that conversion rule.

7. The data converting program of any one of claims 1 to 6, the data converting process further comprising outputting the second plurality of data that are generated, and the application probability per conversion rule.

8. A data converting device comprising a control section that executes processing of:

for each of a plurality of conversion rules, specifying a difference between pre-conversion data and post-conversion data generated by applying the plurality of conversion rules respectively to the pre-conversion data;
determining application probabilities of the plurality of conversion rules, respectively, in accordance with deviations in a first plurality of data based on a first attribute of the first plurality of data and the differences for the plurality of conversion rules; and
generating a second plurality of data by applying the plurality of conversion rules to the first plurality of data in accordance with the application probabilities.

9. The data converting device of claim 8, wherein each of the deviations is deviation of a number of the first plurality of data per combination of the first attribute and a second attribute.

10. The data converting device of claim 9, wherein:

the plurality of conversion rules are respectively expressed by combinations of pre-conversion data and post-conversion data, and

the determining of the application probabilities includes determining the application probabilities based on numbers of data in a case of allocating the first plurality of data to the respective conversion rules to which the first plurality of data correspond, such that the deviations and the differences become minima.

11. The data converting device of claim 10, wherein the determining of the application probabilities includes determining the application probabilities such that a sum of the application probabilities of the respective plurality of conversion rules to which the first plurality of data correspond is one.

12. The data converting device of claim 10 or claim 11, wherein the determining of the application probabilities includes determining the application probabilities such that the deviations and the differences become minima, by applying a minimum cost flow problem to a network that includes a source node, first nodes corresponding to the first plurality of data, second nodes corresponding to the plurality of conversion rules, third nodes corresponding to combinations of the first attributes and the second attributes, a sink node, first edges connecting the source node and the first nodes and having, as capacities, numbers of data corresponding to the first nodes, second edges connecting the first nodes and the second nodes and having, as costs, the differences in a case in which the data corresponding to the first nodes is converted by conversion rules corresponding to the second nodes, third edges connecting the second nodes and the third nodes that correspond to the combinations for post-conversion data expressed by conversion rules corresponding to the second nodes, and fourth edges connecting the third nodes and the sink node and having, as capacities, numbers of data that are set such that the deviations become fair.

13. The data converting device of any one of claims 8 to 12, wherein the generating of the second plurality of data includes, for each conversion rule to which the first plurality of data correspond, applying the conversion rule to, among the first plurality of data, data of a number corresponding to the application probability determined for that conversion rule.

14. The data converting device of any one of claims 8 to 13, the processing further comprising outputting the second plurality of data that are generated, and the application probability per conversion rule.

15. A data converting method in which a computer executes processing of:

for each of a plurality of conversion rules, specifying a difference between pre-conversion data and post-conversion data generated by applying the plurality of conversion rules respectively to the pre-conversion data; determining application probabilities of the plurality of conversion rules, respectively, in accordance with deviations in a first plurality of data based on a first attribute of the first plurality of data and the differences for the plurality of conversion rules; and generating a second plurality of data by applying the plurality of conversion rules to the first plurality of data in accordance with the application probabilities.

# FIG.1

100

| SEX<br>(MALE = 1, FEMALE = 0) | EMPLOYMENT<br>(ADVISABLE = 1,<br>INADVISABLE = 0) |
|---|---|
| 1 | 1 |
| 1 | 1 |
| 1 | 0 |
| 0 | 0 |
| 0 | 0 |
| 0 | 1 |

| | EMPLOYMENT=<br>ADVISABLE | EMPLOYMENT=<br>INADVISABLE |
|---|---|---|
| SEX =<br>MALE | 2 | 1 |
| SEX =<br>FEMALE | 1 | 2 |

102

| SEX<br>(MALE = 1, FEMALE = 0) | EMPLOYMENT<br>(ADVISABLE = 1,<br>INADVISABLE = 0) |
|---|---|
| 1 | 1 |
| 1 | 1 |
| 1 | 0 |
| 0 | 1 |
| 0 | 0 |
| 0 | 1 |

| | EMPLOYMENT=<br>ADVISABLE | EMPLOYMENT=<br>INADVISABLE |
|---|---|---|
| SEX =<br>MALE | 2 | 1 |
| SEX =<br>FEMALE | 2 | 1 |

# FIG.2

PRE-CONVERSION DATA
CONVERSION RULE

10

SPECIFYING SECTION 12

DETERMINING SECTION 14

GENERATING SECTION 16

OUTPUTTING SECTION 18

POST-CONVERSION DATA

FIG.3

# FIG.4

# FIG.5

40

49

| 41 | 44 | 45 | 46 |
|---|---|---|---|
| CPU | INPUT/OUTPUT DEVICE | R/W DEVICE | COMMUNICATION I/F |

47

STORAGE 50

MEMORY

DATA CONVERTING PROGRAM

SPECIFYING PROCESS — 52

DETERMINING PROCESS — 54

GENERATING PROCESS — 56

OUTPUTTING PROCESS — 58

43

42

# FIG.6

```
        ┌─────────────┐
        │    START    │
        └─────────────┘
               │
    ┌──────────────────────────┐
    │   ACQUIRE PRE-CONVERSION  │ ～S10
    │  DATA AND CONVERSION RULES│
    └──────────────────────────┘
               │
    ┌──────────────────────────┐
    │  SPECIFY DISTANCE BETWEEN │ ～S12
    │  PRE-CONVERSION DATA AND  │
    │   POST- CONVERSION DATA   │
    └──────────────────────────┘
               │
    ┌──────────────────────────┐
    │   DETERMINE APPLICATION   │ ～S14
    │  PROBABILITY PER CONVERSION│
    │            RULE           │
    └──────────────────────────┘
               │
    ┌──────────────────────────┐
    │ GENERATE CONVERSION DATA  │ ～S16
    │   BY APPLYING CONVERSION  │
    │  RULES ON BASIS OF APPLICATION│
    │       PROBABILITIES       │
    └──────────────────────────┘
               │
    ┌──────────────────────────┐
    │ OUTPUT POST-CONVERSION DATA│ ～S18
    └──────────────────────────┘
               │
        ┌─────────────┐
        │     END     │
        └─────────────┘
```

Europäisches
Patentamt
European
Patent Office
Office européen
des brevets

## EUROPEAN SEARCH REPORT

Application Number

EP 23 15 5513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 111 911 A1 (ATB FINANCIAL [CA]) 12 September 2021 (2021-09-12) * paragraphs [0035] - [0037], [0041], [0047], [0051] - [0055], [0059], [0071] - [0082], [0134] * ----- | 1-15 | INV. G06N5/025 G06N5/01 |
| X | US 2020/387836 A1 (NASR-AZADANI MOHAMAD MEHDI [US] ET AL) 10 December 2020 (2020-12-10) * paragraphs [0024] - [0027], [0065] - [0071] * ----- | 1-15 | |

TECHNICAL FIELDS
SEARCHED     (IPC)

G06N

The present search report has been drawn up for all claims

| Place of search | Date of completion of the search | Examiner |
|---|---|---|
| The Hague | 31 July 2023 | Bykowski, Artur |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 15 5513**

**31-07-2023**

| Patent document cited in search report | | Publication date | Patent family member(s) | | Publication date |
|---|---|---|---|---|---|
| CA 3111911 | A1 | 12-09-2021 | CA | 3111911 A1 | 12-09-2021 |
| | | | US | 2021287119 A1 | 16-09-2021 |
| US 2020387836 | A1 | 10-12-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FELDMAN ; M., FRIEDLER ; S.A., MOELLER ; J., SCHEIDEGGER ; C. AND VENKATASUBRAMANI-AN S.** Certifying and removing disparate impact. *In proceedings of the 21th ACM SIGKDD international conference on knowledge discovery and data mining,* August 2015, 259-268
- **HAJIAN, S. ; DOMINGO-FERRER, J.** *A methodology for direct and indirect discrimination prevention in data mining,* 2012, vol. 25 (7), 1445-1459

- **CALMON ; F.P. ; WEI ; D., VINZAMURI ; B., RAMAMURTHY ; K.N. ; VARSHNEY, K.R.** Optimized pre-processing for discrimination prevention. *In Proceedings of the 31st International Conference on Neural Information Processing Systems,* December 2017, 3995-4004